**Europäisches Patentamt**

**European Patent Office**

**Office européen des brevets**

(19)

(11) Veröffentlichungsnummer: **0 362 543 B1**

(12) # EUROPÄISCHE PATENTSCHRIFT

(45) Veröffentlichungstag der Patentschrift:
**06.11.91 Patentblatt 91/45**

(51) Int. Cl.⁵: $B60D\ 1/52$

(21) Anmeldenummer: **89115733.1**

(22) Anmeldetag: **25.08.89**

(54) Befestigungsvorrichtung für ein lösbar an einem Kraftfahrzeug anbringbares Teil.

(30) Priorität: **07.09.88 DE 3830425**

(43) Veröffentlichungstag der Anmeldung:
**11.04.90 Patentblatt 90/15**

(45) Bekanntmachung des Hinweises auf die
Patenterteilung:
**06.11.91 Patentblatt 91/45**

(84) Benannte Vertragsstaaten:
**AT BE CH DE ES FR GB GR IT LI LU NL SE**

(56) Entgegenhaltungen:
**FR-A- 2 513 576**
**US-A- 2 737 399**

(73) Patentinhaber: **Rumpp, Gerhard**
**Schornstrasse 2**
**W-8084 Inning/Ammersee (DE)**

(72) Erfinder: **Rumpp, Gerhard**
**Schornstrasse 2**
**W-8084 Inning/Ammersee (DE)**

(74) Vertreter: **Patentanwälte Grünecker,**
**Kinkeldey, Stockmair & Partner**
**Maximilianstrasse 58**
**W-8000 München 22 (DE)**

## Beschreibung

Die Erfindung bezieht sich auf eine Befestigungsvorrichtung der im Oberbegriff des Patentanspruchs 1 genannten Art.

Eine solche, aus der DE-OS 3512981 bekannte Befestigungsvorrichtung weist als Aufnahmeteil einen im Rückbereich eines Zugfahrzeuges fest angebrachten Kupplungswechselrahmen auf, der mit Hinterschneidungen versehen ist. Die mit diesem Kupplungswechselrahmen lösbar zu verbindenden unterschiedlichen Teile sind unterschiedlich ausgebildete Kupplungen, wie z.B. ein Kugelkopf oder eine Öse, wobei die unterschiedlichen Kupplungen mit Profilteilen versehen sind, die in die Hinterschneidungen des Kupplungswechselrahmens formschlüssig eingreifen. Die Kupplungen werden außerdem über Bolzen und Muttern mit dem Kupplungswechselrahmen verbunden.

Aufgabe der Erfindung ist es, eine Befestigungsvorrichtung der im Oberbegriff des Patentanspruch 1 genannten Art so auszubilden, daß diese in Verbindung mit unterschiedlichen Zugfahrzeugen eine freizügige Anbringung von unterschiedlichen Kupplungen oder Vorsatzgeräten ermöglicht.

Bei einer Befestigungsvorrichtung der genannten Art ist diese Aufgabe durch die im Patentanspruchs 1 angegebenen Merkmale gelöst.

Die erfindungsgemäße Befestigungsvorrichtung zeichnet sich dadurch aus, daß mit Hilfe des Stützträgers die von dem anbringbaren Teil auf das Kraftfahrzeug ausgeübten Zug- und/oder Druckkräfte, die auch quer oder schräg zur Fahrzeuglängsrichtung gerichtet sein können, optimal auf den Fahrzeugrahmen überträgt. Der Stützträger wirkt dabei mit einem Profilteil zusammen, das formschlüssig mit dem Stützträger in Eingriff gebracht wird, wenn das Teil an dem Kraftfahrzeug angebracht ist. Wenn dagegen kein solches Teil an dem Kraftfahrzeug angebracht werden muß, kann das Profilteil vom Kraftfahrzeug gelöst werden und der am Kraftfahrzeug befestigte Stützträger z.B. nach oben geschwenkt werden, um die Bodenfreiheit des Kraftfahrzeuges nicht zu beeinträchtigen.

Gemäß in den Unteransprüchen angegebener Weiterbildungen der Erfindung sind Stützträger und Profilteil an ihren bodenseitigen Enden über miteinander fluchtende weitere Buchsen und einen diese durchdringenden weiteren Bolzen miteinander verbunden. Der Stützträger hat vorzugsweise ein sich in Fahrzeuglängsrichtung erstreckendes balkenförmiges Profil, während das Profilteil ein dieses balkenförmige Profil formschlüssig umgreifendes Hohlprofil hat.

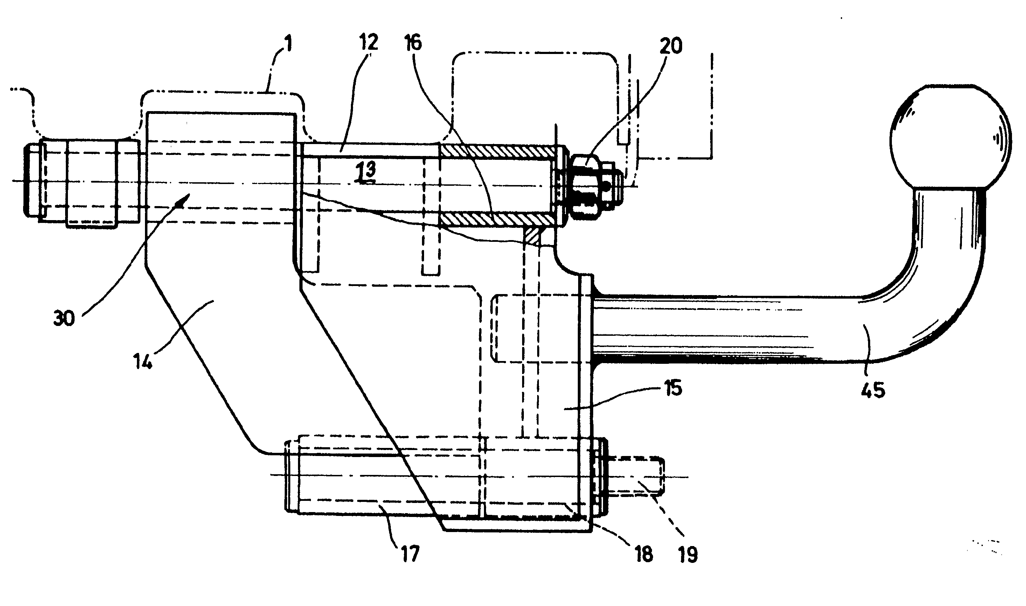

Die Erfindung wird anhand eines in der Zeichnung dargestellten Ausführungsbeispieles näher erläutert.

In der Zeichnung ist mit einer Kontur 1 ein Teil eines Fahrzeugrahmens oder aber eine mit dem Fahrzeugrahmen fest verbundene Grundplatte angedeutet, an der die Befestigungsvorrichtung angebracht werden kann. Eine solche Grundplatte 1 ist in der DE-OS... (Patentmeldung vom gleichen Tage, Anwaltszeichen P 21926) im einzelnen erläutert. Andererseits kann die Befestigungsvorrichtung selbstverständlich an jeder geeigneten Stelle eines Fahrzeuges, insbesondere eines Geländewagens, mit dessen Fahrzeugrahmen verbunden werden.

Die Befestigungsvorrichtung weist als kraftfahrzeugseitiges Aufnahmeteil eine Hülse 12 auf, die an dem Fahrzeugrahmen z.B. angeschweißt sein kann. In dieser Hülse 12 ist ein Bolzen 13 gelagert. Auf der Hülse 12 bzw. dem Bolzen 13 ist ein Stützträger 14 schwenkbar gelagert, der in seiner Gebrauchsstellung nach unten ragt und vorzugsweise ein sich in Fahrzeuglängsrichtung erstreckendes balkenförmiges Profil hat. Auf den über die Hülse 12 hinausstehenden Bolzen 13 ist eine Buchse 16 aufschiebbar, die mit einem Profilteil 15 z.B. durch Schweißen fest verbunden ist. Das Profilteil 15 ragt ebenfalls nach unten und hat ein das balkenförmige Profil des Stützträgers 14 formschlüssig umgreifendes Hohlprofil. Der Bolzen 13 ist in der Hülse 12 und der Buchse 16 mit Hilfe der Mutter 20 gesichert, wodurch Stützträger 14 und Profilteil 15 miteinander in Eingriff gehalten werden.

An dem Profilteil 15 ist eine Kugelkopfkupplung 45 angeschweißt, die in bekannter Weise mit einer Anhängerkupplung od.dgl. zusammenwirken kann.

Sowohl der Stützträger 14 als auch das Profilteil 15 weisen an ihren bodenseitigen Enden weitere Buchsen 17 und 18 auf, durch die hindurch sich ein weiterer Bolzen 19 erstreckt, der mit Hilfe einer weiteren, hier nicht gezeigten Mutter ebenfalls gesichert werden kann.

Der schwenkbare Stützträger 14 wird in seiner in der Zeichnung gezeigten Gebrauchsstellung in einer hier nicht näher gezeigten Weise arretiert.

Wird die Kugelkopfkupplung 45 zusammen mit dem Profilteil 15 von dem Stützträger 14 abgezogen, so kann dieser nach oben geschwenkt werden, um die Bodenfreiheit des Fahrzeuges nicht zu beeinträchtigen. In dieser nach oben geschwenkten Nichtgebrauchsstellung kann der Stützträger durch die hier nicht gezeigte Arretiereinrichtung ebenfalls festgestellt werden.

Obwohl das Profilteil 15 hier zusammen mit einer Kugelkopfkupplung 45 gezeigt ist, kann das Profilteil auch mit anderen Vorsatzgeräten oder Vorsatzelementen verbunden werden. So kann das Profilteil 15 z.B. auch mit einem Räumgerät od. dgl. verbunden werden.

## Patentansprüche

1. Befestigungsvorrichtung für ein lösbar an einem Kraftfahrzeug anbringbares Teil, insbesondere einer Anhängerkupplung, mit einem am Kraftfahrzeug fest angeordneten Aufnahmeteil, das mit dem anbringbaren Teil formschlüssig zusammenwirkt, **dadurch gekennzeichnet**, daß das Aufnahmeteil (12, 13, 14) eine sich im wesentlichen in Längsrichtung des Kraftfahrzeuges erstreckende Hülse (12), einen in dieser gelagerten Bolzen (13) und einen auf der Hülse (12) bzw. dem Bolzen (13) schwenkbar gelagerten Stützträger (14) aufweist, der in seiner Gebrauchsstellung arretierbar ist, und daß das anbringbare Teil ein mit dem Stützträger (14) formschlüssig in Eingriff bringbares Profilteil (15) und eine auf die Hülse (12) bzw. dem Bolzen 813) aufschiebbare Buchse (16) hat.

2. Befestigungsvorrichtung nach Anspruch 1, **dadurch gekennzeichnet**, daß der Stützträger (14) und das Profilteil (15) an ihren bodenseitigen Enden jeweils miteinander fluchtende weitere Buchsen (17, 18) haben, durch die hindurch sich ein weiterer Bolzen (19) erstreckt.

3. Befestigungsvorrichtung nach Anspruch 2, **dadurch gekennzeichnet**, daß die Bolzen (13, 19) jeweils durch zugeordnete Muttern (20) gesichert sind.

4. Befestigungsvorrichtung nach einem der Ansprüche 1 bis 3, **dadurch gekennzeichnet**, daß mit dem Profilteil (15) eine Kugelkopfkupplung (45) verschweißt ist.

5. Befestigungsvorrichtung nach einem der Ansprüche 1 bis 4, **dadurch gekennzeichnet**, daß der Stützträger (14) ein sich in Fahrzeuglängsrichtung erstreckendes balkenförmiges Profil und das Profilteil (15) ein das balkenförmige Profil formschlüssig umgreifendes Hohlprofil hat.

6. Befestigungsvorrichtung nach einem der Ansprüche 1 bis 5, **dadurch gekennzeichnet**, daß eine Arretiereinrichtung vorgesehen ist, mit der der Stützträger (14) in seiner nach oben geschwenkten Nichtgebrauchsstellung festlegbar ist.

## Claims

1. Fixing element for a part which is to be releasably attached to a motor vehicle, in particular a trailer coupling, comprising a receiving part which is fixedly attached to a motor vehicle and which abuttingly co-acts with the part to be attached, **characterised in that** the receiving part (12, 13, 14) comprises a sleeve (12) which extends substantially in the longitudinal direction of the motor vehicle, a bolt (13) mounted therein, and a support means (14) which is pivotably mounted on the sleeve (12) or the bolt (13) respectively and which is arrestable in its operative position, and in that the part to be attached comprises a profile member (15) which abuttingly engages the support means (14), and a bushing (16) which is pushed onto the sleeve (12) or the bolt (13) respectively.

2. Fixing element according to claim 1, **characterised in that** the support means (14) and the profile member (15) have at the bottom-sided ends further bushings (17, 18) which abut against each other and through which extends a further bolt (19).

3. Fixing element according to claim 2, **characterised in that** the bolts (13, 19) are each secured by associated nuts (20).

4. Fixing element according to one of claims 1 to 3, **characterised in that** a ball-head coupling (45) is welded to the profile member (15).

5. Fixing element according to one of claims 1 to 4, **characterised in that** the support means (14) has a beam-like profile extending in the longitudinal direction of the vehicle, and in that the profile member (15) has a hollow profile which abbuttingly surrounds the hollow profile.

6. Fixing element according to one of claims 1 to 5, **characterised in that** an arresting means is provided by which the support means (14) is arrestable in its upward pivoted inoperative position.

## Revendications

1. Dispositif de fixation destiné à une pièce susceptible d'être mise en place de façon démontable sur un véhicule automobile, en particulier un accouplement de remorque, comportant une pièce de réception fixée solidement au véhicule automobile, qui coopère avec la pièce susceptible d'être mise en place, de façon à former une liaison géométrique avec celle-ci, caractérisé par le fait que la pièce de réception (12, 13, 14) comporte une douille (12) qui s'étend dans le sens longitudinal du véhicule automobile, un boulon (13) monté dans celle-ci, et un support d'appui (14) monté de façon pivotante sur la douille (12) ou le boulon (13), lequel support d'appui peut être bloqué dans sa position d'utilisation, et que la pièce susceptible d'être mise en place présente une partie profilée (15) susceptible d'être mise en prise sur le support d'appui (14) en formant une liaison géométrique et comporte un manchon (16) susceptible d'être enfilé sur la douille (12), ou sur le boulon (13).

2. Dispositif de fixation selon la revendication 1, caractérisé par le fait que le support d'appui (14) et la pièce profilée (15) comportent chacun, à leur extrémité située du côté du sol d'autres manchons (17, 18) alignés l'un avec l'autre, dans lesquels s'étend un autre boulon (19).

3. Dispositif de fixation selon la revendication 2, caractérisé par le fait que les boulons (13, 19) sont maintenus de façon sûre au moyen d'écrous (20) qui leur sont affectés.

4. Dispositif de fixation selon l'une des revendications 1 à 3, caractérisé par le fait qu'un accouplement (45) à tête sphérique est soudé à la pièce profilée (15).

5. Dispositif de fixation selon l'une des revendications 1 à 4, caractérisé par le fait que le support d'appui (14) a un profil en forme de poutre qui s'étend dans le sens longitudinal du véhicule et que la pièce profilée (15) présente un profil creux qui entoure le profil en forme de poutre en constituant une liaison géométrique.

6. Dispositif de fixation selon l'une des revendications 1 à 5, caractérisé par le fait que l'on prévoit un dispositif de blocage au moyen duquel le support d'appui (14) peut être bloqué dans sa position de non-utilisation dans laquelle il est pivoté vers le haut.